Europäisches Patentamt

European Patent Office

Office européen des brevets

(19)

(11) Veröffentlichungsnummer : **0 192 172**
**B1**

(12) # EUROPÄISCHE PATENTSCHRIFT

(45) Veröffentlichungstag der Patentschrift :
07.06.89

(51) Int. Cl.⁴ : **G 01 C 22/02**

(21) Anmeldenummer : 86101737.4

(22) Anmeldetag : 12.02.86

(54) **Anlage zur Ermittlung der Bewegungsabläufe bei Laufdisziplinen.**

(30) Priorität : 18.02.85 DE 3505521

(43) Veröffentlichungstag der Anmeldung :
27.08.86 Patentblatt 86/35

(45) Bekanntmachung des Hinweises auf die Patenterteilung : 07.06.89 Patentblatt 89/23

(84) Benannte Vertragsstaaten :
AT BE CH DE FR GB IT LI LU NL SE

(56) Entgegenhaltungen :
EP–A–.0 119 009
US–A– 4 371 945

(73) Patentinhaber : **PUMA Aktiengesellschaft Rudolf Dassler Sport
Würzburger Strasse 13
D-8522 Herzogenaurach (DE)**

(72) Erfinder : **Dassler, Armin A.
Christpoph-Dassler-Strasse 1
D-8522 Herzogenaurach (DE)**
Erfinder : **Pirner, Gerhard, Dipl.-Ing.
Reutleser Strasse 56
D-8500 Nürnberg 90 (DE)**
Erfinder : **Gerhäuser, Heinz, Dr.-Ing.
Am Europakanal 5
D-8520 Erlangen (DE)**

(74) Vertreter : **Hufnagel, Walter, Dipl.-Ing., Dipl.-Wirtsch.-
Ing. et al
Dorner & Hufnagel Patentanwälte Bad Brückenauer
Str. 19
D-8500 Nürnberg 90 (DE)·**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die vorliegende Erfindung bezieht sich auf eine Anlage zur Ermittlung der Bewegungsabläufe bei Laufdisziplinen mit zwei Schuhen in denen jeweils ein Bodenkontakt- oder Drucksensor vorgesehen ist.

Eine aus der US-A-4 371 945 bekannte Anlage besteht aus einem an einem Fuß angebrachten Ultraschallgenerator, einem am anderen Fuß angebrachten Ultraschalldetektor mit Hochfrequenzsender und einem am Arm getragenen HF-Empfänger und Prozessor. Der Ultraschallgenerator gibt nach Einschalten dauernd eine konstante Impulskette konstanter Pulsbreite und Pulspause ab. Der Ultraschalldetektor empfängt diese Signale beim Vorbeibewegen der Füße aneinander, wobei bei der empfangenen und wieder abgestrahlten Impulskette die Pulspausen komprimiert oder gedehnt werden. Hieraus werden nach den dem Prozessor eingegebenen Algorithmen die gewünschten Laufdaten berechnet. Hierbei können insbesondere auch Flug- oder Sprungphasen nur empirisch in die Berechnung mit einbezogen werden.

Bei einer aus der EP-A-0 119 009 bekannten Anlage sind in den Schuhen Drucksensoren vorgesehen, die so lange ein Signal aussenden, solange der betreffende Schuh Bodenkontakt hat. Dieses Signal wird einem Prozessor zugesendet. Dem Prozessor muß ebenfalls ein Algorithmus eingegeben werden, so daß er aus der Bodenkontaktzeit die Schrittweite ermitteln und die Laufstrecke berechnen kann. Dabei muß vorher für jede Person die zur Bodenkontaktzeit gehörige Schrittlänge ermittelt werden.

Mit der vorliegenden Erfindung soll die Aufgabe gelöst werden, die Anlage der eingangs erwähnten Art so auszubilden, daß es möglich ist, die tatsächliche Schrittweite unabhängig von der Laufgeschwindigkeit und unter Berücksichtigung einer eventuellen Flugphase mit möglichst hoher Genauigkeit zu messen.

Gelöst wird diese Aufgabe durch die im Anspruch 1 angegebenen Merkmale.

Die Erfindung ermöglicht es, die Schrittweite zwischen dem abhebenden Fuß und dem auftreffenden Fuß mit relativ geringem Aufwand äußerst genau zu messen und auf Grund dieser Meßwerte beispielsweise die gelaufene Wegstrecke zu ermitteln.

Weitere vorteilhafte Einzelheiten der Erfindung sind in den Unteransprüchen enthalten und werden nachfolgend anhand eines in der Zeichnung veranschaulichten Ausführungsbeispiels näher beschrieben. Dabei zeigen :

Fig. 1 ein Schema einer erfindungsgemäßen Anlage,

Fig. 2 die Impulsdiagramme der von den einzelnen Schuhen ausgehenden bzw. empfangenen Signale sowie ein Impulsdiagramm der vom zweiten Empfänger aufgenommenen Signale,

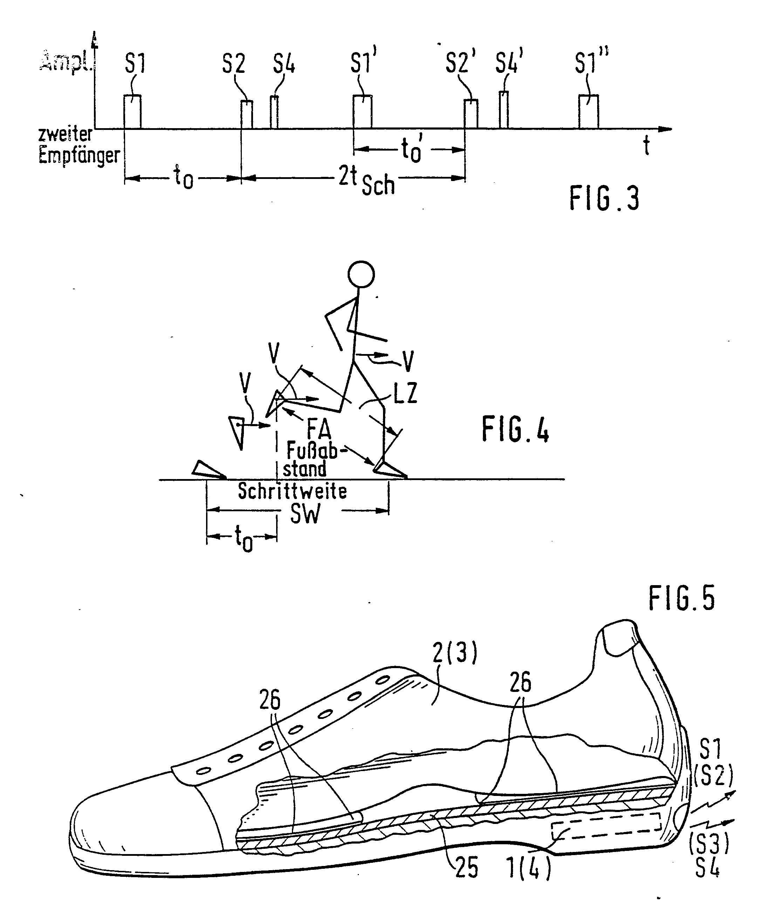

Fig. 3 ein Impulsdiagramm des zweiten Empfängers über einen Zeitabschnitt von zwei Schritten,

Fig. 4 eine Bewegungsphase des Läufers und

Fig. 5 einen für die Anlage gemäß Figur 1 entwickelten Sportschuh, teilweise im Schnitt.

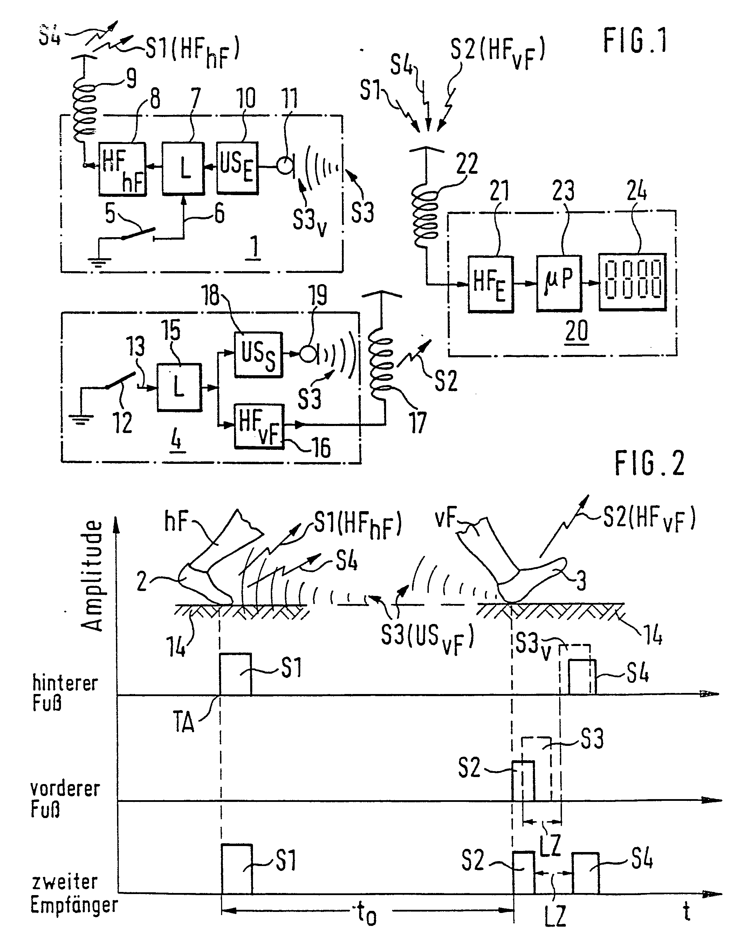

In Fig. 1 ist mit 1 eine erste Einrichtung dargestellt, die in dem einen Schuh 2 (Fig. 2), im weiteren beispielhaft als der Schuh des hinteren Fußes hF bezeichnet, vorgesehen ist. Im anderen Schuh 3 (Fig. 2) ist eine zweite Einrichtung 4 vorgesehen, die also im Beispiel dem vorderen Fuß vF zugeordnet ist.

Die erste Einrichtung 1 enthält einen ersten Bodenkontakt- oder Drucksensor 5, der als Schaltkontakt ausgebildet sein kann. Dieser Drucksensor 5 ist in dem Schuh 2 so angebracht, daß er beim Abheben der Schuhsohle oder des Absatzes des Schuhes 2 einen Stromkreis schließt oder öffnet. Der vom Drucksensor 5 abgehende Leiter 6 führt zu einer Logik 7, die aus dem Sensorsignal einen Impuls aufbereitet, der einem ersten Sender 8 zugeleitet wird und von diesem vorzugsweise in modulierter Form als erstes Signal S1 ausgegeben wird.

Im Ausführungsbeispiel ist er erste Sender 8 ein Hochfrequenzsender $HF_{hF}$, der das modulierte Impulssignal S1, beispielsweise auch in digitaler Form, über eine geeignete Antenne 9 abstrahlt.

Weiterhin beinhaltet die erste Einrichtung 1 einen ersten Empfänger 10 für akustische und/oder elektromagnetische Wellen. Im Beispiel ist der Empfänger 10 als Ultraschallempfänger $US_E$ ausgebildet, dem ein entsprechender Sensor 11, also hier ein Ultraschallwandler, beispielsweise eine Art Mikrophonkapsel, ein Piezowandler oder dgl. zugeordnet ist. Vom Ultraschallempfänger 10 gelangt ein empfangenes drittes Signal S3, das später noch erläutert werden wird, an die Logik 7, die daraus einen Empfangsimpuls von bestimmter Zeitdauer, beispielsweise von 50 μs bis 1 000 μs, insbesondere 200 μs bis 400 μs, bildet. Dieser Empfangsimpuls wird dem ersten Sender 8 oder einem weiteren, im Schuh 2 vorgesehenen Sender zugeführt und von diesem in Form eines vierten Signals S4, insbesondere eines modulierten Signals, abgestrahlt. Die einzelnen Bausteine 7, 8, 10 — gegebenenfalls auch 5 und 9 — können zu einer baulichen Einheit zusammengefaßt und damit als Kompaktelement in dem Schuh 2 untergebracht sein.

Die zweite Einrichtung 4 enthält einen zweiten Drucksensor 12 gleichen oder ähnlichen Aufbaues wie der erste Drucksensor 5. Über eine Leitung 13 wird beim Auftreffen des die Einrichtung 4 enthaltenden Schuhes 3 auf einen Untergrund 14 (Fig. 2) eine Spannung an eine Logik 15 an- oder abgeschaltet. Die Logik 15 bildet daraus einen Steuerimpuls, der an einen zweiten Sender 16, der hier ebenfalls als Hochfrequenzsender $HF_{vF}$ ausgebildet ist, geleitet und von diesem über ein geeignetes Koppelglied, beispielsweise eine Antenne 17, als zweites Signal S2 in insbesondere modulierter Form abgestrahlt wird. Außerdem wird der Steuerimpuls über einen weiteren zweiten Sender 18 und ein zugeordnetes Auskoppelelement 19 als drittes Signal S3 abgestrahlt. Im vorliegenden Falle ist der weitere zweite Sender 18 ein Ultraschallsender $US_S$ und das Auskoppelelement 19 ein Ultraschallgeber, beispielsweise eine Art Mikrophonkapsel, ein Piezoelement oder dgl. Das dritte Signal S3 ist also ein Ultraschallsignal. Dieses wird, wie eingangs beschrieben, vom Ultraschallsensor 11 in der Einrichtung 1 empfangen und über den ersten Sender 8 als viertes Signal S4 abgestrahlt. Da die beiden Schuhe 2 und 3 im Moment des Auftreffens des vorderen Schuhes 3 einen der jeweiligen Lage der Füße hF und vF entsprechenden Fußabstand FA aufweisen, benötigt das dritte Signal S3 eine dem Fußabstand entsprechende Laufzeit LZ. Um diese Laufzeit ist dann auch das vierte Signal S4 gegenüber dem dritten Signal S3 verzögert. Aus der Schallgeschwindigkeit und der Laufzeit kann daher der genaue Fußabstand FA im Zeitpunkt des Auftreffens des vorderen Fußes vF auf den Untergrund 14 ermittelt werden, da $FA = v_{Luft} \cdot t_{LZ}$, wenn $v_{Luft}$ die Schallgeschwindigkeit in Luft und $t_{LZ}$ die obengenannte Laufzeit ist.

Um die Signale S1, S2 und S4 empfangen und aus diesen die gewünschten Daten ermitteln zu können, ist der Anlage eine dritte Einrichtung 20 mit einem zweiten Empfänger 21 zugeordnet, die insbesondere vom Läufer in der Hand oder in der Kleidung getragen werden kann. Der Empfänger 21 ist in der Lage, die Signale S1, S2 und S4 über eine Antenne 22 zu empfangen und diese aufzubereiten. Im vorliegenden Falle ist dies ein Hochfrequenzempfänger $HF_E$, der die modulierten Signale S1, S2, S4 demoduliert und die gewonnenen Impulse einem Zeitmesser zuleitet, der in diesem Fall in einem zugeordneten, als Auswerteeinheit dienenden Mikrocomputer 23 integriert ist. Letzterer enthält wenigstens einen, insbesondere programmierbaren, Speicher und eine Recheneinheit. Aus dem zeitlichen Abstand der einzelnen Signale, die für den hinteren Fuß hF, für den vorderen Fuß vF und für den zweiten Empfänger 21 anhand des in der Fig. 2 dargestellten Impulsdiagramms dargestellt sind, kann der Mikroprozessor beispielsweise den Fußabstand FA und die jeweilige Schrittweite, sowie daraus die gelaufene Wegstrecke und die jeweilige oder die durchschnittliche Geschwindigkeit berechnen. Dies geschieht etwa wie folgt:

Im Diagramm der Fig. 2 wird beim Abheben des Schuhes 2 des hinteren Fußes hF, wie beschrieben, das Signal S1 erzeugt. Da es im Ausführungsbeispiel ein HF-Signal ist, ist es auch mit $HF_{hF}$ bezeichnet. Nach einiger Zeit, die als Sprungzeit $t_o$ bezeichnet ist, trifft der vordere Schuh 3 auf dem Untergrund 14 auf und gibt die Signale S2, hier als HF-Signal $HF_{vF}$, und S3, hier als Ultraschallsignal $US_{vF}$ des Ultraschallsenders 18, gleichzeitig oder wenigstens annähernd gleichzeitig aus. Letzteres Signal S3 wird um die Laufzeit LZ verzögert als verzögertes drittes Signal $S3_v$ empfangen und dadurch das vierte Signal S4 vom ersten Senter 8 im Schuh 2 des hinteren Fußes hF ausgestrahlt.

Der zweite Empfänger 21 erhält also zum Anfangszeitpunkt TA das erste Signal S1, nach der Sprungzeit $t_o$ das zweite Signal S2 und nach der Laufzeit LZ das vierte Signal S4. Anschließend kommt nach einiger Zeit wieder ein erstes Signal S1', nach der weiteren Sprungzeit $t_o'$ das folgende zweite Signal S2' usw. Der zeitliche Abstand zwischen zwei aufeinanderfolgenden zweiten Signalen S2 und S2' entspricht der Zeit von zwei Schritten und ist hier mit $2t_{Sch}$ bezeichnet.

Die Berechnung der jeweiligen Schrittweite SW geht von folgender Überlegung aus:

Eingehende Studien des Bewegungsablaufes der Beine beim Laufen mit einer Sprungphase, d. h. bei einer Laufart, bei der ein Abheben des hinteren Fußes vom Untergrund 14 erfolgt, bevor der vordere Fuß den Untergrund 14 erreicht hat, haben ergeben, daß während dieser Sprungphase der hintere Fuß hF und damit der jeweils hintere Schuh 2 praktisch die gleiche Geschwindigkeitskomponente v in Laufrichtung besitzt wie der Körper des Läufers. Diese Geschwindigkeitskomponente kann definiert werden als Schrittweite SW pro Schrittzeit $t_{Sch}$, also:

$$v = \frac{SW}{t_{Sch}}$$

Die Schrittweite SW mit einer Sprungphase ergibt sich aus dem Fußabstand FA (ohne Berücksichtigung der Winkellage der Strecke von FA zum Untergrund 14), zusätzlich dem Wegabschnitt, der in der Sprungphase, also in der Zeit $t_o$, zurückgelegt wird. Demnach ergibt sich die angenähert genaue Schrittweite

$$SW = FA + t_o \cdot v = FA + t_o \frac{SW}{t_{Sch}} \quad \text{und durch Umrechnung:}$$

$$SW = \frac{FA}{1 - \frac{t_o}{t_{Sch}}}$$

Es ist daraus ersichtlich, daß beim Laufen ohne Sprungphase, da $t_o = 0$ ist, die Schrittweite SW gleich dem Fußabstand FA ist. Zur noch genaueren Berechnung kann die Winkellage der Strecke von FA zum Untergrund 14 als Konstante mit berücksichtigt werden. Entsprechend muß die gemessene Schrittzeit $2t_{Sch}$ aus dem Zeitabstand S2-S2' halbiert in die Rechnung einbezogen werden. Die empfangenen und/oder ermittelten Werte, wie Schrittweite SW, Fußabstand FA, Gesamtlaufstrecke, Gesamtzeit und beliebige Zwischenergebnisse können vom Mikrocomputer 23 je nach Programmeingabe

als Signalcode ausgegeben und/oder beispielsweise einem Display oder einer Anzeige 24 zugeführt werden.

Gemäß einer in Figur 5 dargestellten Weiterbildung der Erfindung ist auf der Innensohle 25 eines jeden Schuhes 2, 3 eine Flächenelektrode 26, insbesondere im Fersenbereich und/oder im Vorderfußbereich, vorgesehen. Diese ist jeweils mit der Ausgangselektrode eines eine elektromagnetische Strahlung im Wellenlängenbereich bis zu einigen GHz abstrahlenden ersten oder zweiten Senders 8 bzw. 16 verbunden oder elektrisch gekoppelt. Auf diese Weise wird der Körper des Läufers als Auskoppelglied, beispielsweise als Antenne benutzt. Dadurch können Sender verwendet werden, die eine sehr kleine Ausgangsleistung besitzen, wobei aber trotzdem die Funktion der Anlage sichergestellt ist. Außerdem werden Störungen zwischen nahe benachbart laufenden Personen praktisch ausgeschlossen.

Dadurch, daß alle Schrittweiten in Form exakter Meßwerte vorliegen, kann durch die Auswerteeinrichtung 23 die gelaufene Wegstrecke, die Momentan- und Durchschnittsgeschwindigkeit ermittelt werden. Es können aber auch daraus ableitbare Größen, beispielsweise der Kalorienverbrauch, ermittelt und angezeigt werden. Auch können in der Auswerteeinrichtung 23 Speicher zur Speicherung der empfangenen Signale und/oder der ermittelten Zwischen- und/oder Endergebnisse vorgesehen sein.

Mit besonderem Vorteil wird die erfindungsgemäße Anlage bei Sportschuhen für Laufdisziplinen mit einem in der Schuhsohle eines Schuhes vorgesehenen, beim Auftreten ein Signal abgebenden Sensor und einem Sender, der eine dem Signal entsprechende Strahlung abgibt, die von einem ortsungebundenen Empfänger empfangen wird, gemäß der älteren europäischen Patentanmeldung Anmeldenummer 851012195 EP-A-0 152 057, veröffentlicht am 21.08.85, eingesetzt. Dort ist die Anordnung so getroffen, daß ein Empfänger oder ein Sende-Empfänger in einem Schuh vorgesehen ist, der die vom Sender des anderen Schuhes des Läufers ausgegebene Strahlung aufnimmt. Über einen zugeordneten Rechner ist aus dem vom Sender ausgegebenen Signal oder der entsprechenden Strahlung und aus der vom Empfänger aufgenommenen Strahlung die Entfernung der beiden Schuhe und damit die Schrittlänge beim oder kurz nach dem Auftreten des mit dem Sender versehenen Schuhes ermittelbar. Das in dieser älteren Anmeldung unter Schutz gestellte Verfahren ist dadurch gekennzeichnet, daß beim Auftreffen des vorderen Schuhes auf dem Boden vom Sender dieses Schuhes ein Ausgangssignal ausgegeben und derart abgestrahlt wird, daß es sowohl von einem am Körper des Sportlers vorgesehenen Empfänger als auch vom Empfänger des hinteren Schuhes empfangen werden kann. Der Empfang des Ausgangssignals durch den Empfänger im hinteren Schuh veranlaßt den im hinteren Schuh vorhandenen Sender seinerseits ein Ausgangssignal derart abzustrahlen, daß es entweder von dem am Körper des Sportlers vorgesehenen Empfänger direkt oder über den vorderen Schuh als Relaisstation empfangen werden kann. Aus den beiden von dem am Körper getragenen Empfänger empfangenen zeitlich verschobenen Ausgangssignalen wird die Bein- oder Laufgeschwindigkeit und/oder die Schrittweite des Sportlers über ein dem Empfänger zugeordnetes Rechenwerk ermittelt und über eine optische Anzeige und/oder über einen akustischen Wandler ausgegeben.

## Patentansprüche

1. Anlage zur Ermittlung der Bewegungsabläufe bei Laufdisziplinen mit zwei Schuhen, in denen jeweils ein Bodenkontakt- oder Drucksensor vorgesehen ist, bei der in wenigstens einem Schuh (2 und/oder 3) ein beim Abheben vom Untergrund (14) ansprechender erster Drucksensor (5) und ein von diesem ansteuerbarer und dadurch ein erstes Signal (S1) abgebender erster Sender (8) sowie ein auf akustische und/oder elektromagnetische Strahlung ansprechender erster Empfänger (10) vorgesehen ist, der ebenfalls den oder einen weiteren ersten Sender (8) ansteuert, bei der im anderen bzw. jeweils anderen Schuh (3 bzw. 2) ein beim Auftreffen auf den Untergrund (14) ansprechender zweiter Sensor (12) und wenigstens ein von diesem ansteuerbarer zweiter Sender (16) vorgesehen ist, der durch Ansteuerung durch den zweiten Sensor (12) ein zweites Ausgangssignal (S2) ausgeben kann, bei der der zweite oder ein weiterer zweiter Sender (16 bzw. 18) durch Ansteuerung durch den zweiten Sensor (12) ein weiteres, drittes Ausgangssignal (S3) ausgeben kann, das vom ersten Empfänger (10) des einen Schuhes (2) empfangen werden kann und der erste Empfänger (10) über den ersten bzw. weiteren ersten Sender (8) ein vom empfangenen dritten Ausgangssignal (S3) ausgelöstes viertes Ausgangssignal (S4) aussenden kann, und bei der den genannten Anlagegegenständen ein zweiter Empfänger (21) zugeordnet ist, der das erste, zweite und vierte Signal (S1, S2, S4) empfangen und nach Herkunft und Zeit unterscheiden kann und diesen Signalen entsprechende oder abgeleitete Steuersignale einer dem zweiten Empfänger (21) zugeordneten Auswerteeinrichtung (23) zuleitet, die ihrerseits aus den Steuersignalen den Bewegungsablauf nach Zeit und Weg ermittelt.

2. Anlage nach Anspruch 1, dadurch gekennzeichnet, daß der erste Sender (8) und der zweite Sender (16) als Hochfrequenzsender, der erste Empfänger (10) als Ultraschallempfänger, der weitere zweite Sender (18) als Ultraschallsender und der zweite Empfänger (21) als Hochfrequenzempfänger ausgebildet sind.

3. Anlage nach Anspruch 1 oder 2, dadurch gekennzeichnet, daß die Hochfrequenzsignale, nämlich das erste Signal (S1), das dritte Signal (S3) und das vierte Signal (S4), als Impulse mit voneinander unterschiedlicher Impulslänge ausgesendet werden.

4. Anlage nach einem der Ansprüche 1 bis 3, dadurch gekennzeichnet, daß der zweite Empfänger (21) und/oder die Auswerteeinrichtung (23) ein Zeitmeßglied enthält bzw. enthalten, das aus dem zeitlichen Abstand jeweils zweier gleichartiger, aufeinanderfolgender erster und/oder zweiter Signale (S1, S1', S2, S2') die Schrittzeit ($t_{Sch}$), aus dem zeitlichen Abstand des ersten Signals (S1) vom unmittelbar folgenden zweiten Signal (S2) die Sprungzeit ($t_o$) und aus der Laufzeit (LZ) des dritten Signals (S3) vom Auftreten des anderen Schuhes (3) auf den Untergrund (14) bis zum Eintreffen beim ersten Empfänger (10), also aus dem zeitlichen Abstand des zweiten Signals (S2) vom vierten Signal (S4) beim zweiten Empfänger (21) der jeweilige Fußabstand (FA) ermittelt wird.

5. Anlage nach Anspruch 4, dadurch gekennzeichnet, daß die Auswerteeinrichtung (23) aus der Schrittzeit ($t_{Sch}$), der Sprungzeit ($t_o$) und dem Fußabstand (FA) die jeweilige Schrittweite (SW) gemäß der Formel

$$SW = \frac{FA}{1 - \dfrac{t_o}{t_{Sch}}}$$

ermittelt und als Anzeigesignalcode bereitstellt und/oder ausgibt.

6. Anlage nach einem der Ansprüche 1 bis 5, dadurch gekennzeichnet, daß die Auswerteeinrichtung ein Mikrocomputer (23) ist.

7. Anlage nach Anspruch 5 oder 6, dadurch gekennzeichnet, daß der Anzeigesignalcode über eine zugeordnete Anzeige (24) angezeigt wird.

8. Anlage nach einem der Ansprüche 1 bis 7, dadurch gekennzeichnet, daß alle Schrittweiten (SW) in der Auswerteeinrichtung (23) aufaddiert und das Ergebnis als Wegstreckencode zur Verfügung gestellt und/oder über einen Wandler einer Anzeige (24) zugeführt wird.

9. Anlage nach einem der Ansprüche 1 bis 8, dadurch gekennzeichnet, daß in der Auswerteeinrichtung (23) Speicher zur Speicherung der empfangenen Signale und/oder der ermittelten Zwischen- und/oder Endergebnisse vorgesehen sind.

10. Anlage nach einem der Ansprüche 1 bis 9, dadurch gekennzeichnet, daß in den Schuhen (2, 3) auf der Innensohle (25) eine mit dem jeweiligen Senderausgang verbundene Flächenelektrode (26) vorgesehen ist und über diese der Körper des Trägers der Schuhe als Auskoppelglied bzw. als Antenne dient.

## Claims

1. An equipment for determination of the cycles of motion in running disciplines with a pair of shoes in each of which a ground contact sensor or pressure sensor is provided, where in at least one shoe (2 and/or 3) a first pressure sensor (5) which responds upon leaving the ground (14) below and a first transmitter (8) which may be energized by it and thereby emits a first signal (S1) are provided, as also a first receiver (10) which responds to acoustic and/or electromagnetic radiation and like wise energizes the or a further first transmitter (8), where in the other shoe or in the respective other shoe (3 resp. 2) a second sensor (12) which responds upon meeting the ground (14) below and at least one second transmitter (16) which may be energized by it and through being energized by the second sensor (12) can emit a second output signal (S2) are provided, where the second or a further second transmitter (16 resp. 18) can through being energized by the second sensor (12) emit a further, third output signal (S3) which can be received by the first receiver (10) of the one shoe (2) and the first receiver (10) can send out via the first or respectively the further first transmitter (8) a fourth output signal (S4) triggered by the received third output signal (S3), and where a second receiver (21) is associated with the aforesaid items of the equipment, which can receive the first, second and fourth signals (S1, S2, S4) and distinguish between them according to origin and time and feeds control signals corresponding with or derived from those signals to an evaluator device (23) which is associated with the second receiver (21) and in turn determines from the control signals the cycle of motion according to time and distance.

2. An equipment as in Claim 1, characterized in that the first transmitter (8) and the second transmitter (16) are made as high frequency transmitters, the first receiver (10) is made as an ultrasonic receiver, the further second transmitter (18) as an ultrasonic transmitter and the second receiver (21) as a high frequency receiver.

3. An equipment as in Claim 1 or 2, characterized in that the high-frequency signals, that is, the first signal (S1), the third signal (S3) and the fourth signal (S4) are sent out as pulses of pulse lengths differing from one another.

4. An equipment as in one of the Claims 1 to 3, characterized in that the second receiver (21) and/or the evaluator device (23) contain or contains a time-measuring member [through] which from the interval of time between any two like successive first and/or second signals (S1, S1', S2, S2') the pace time ($t_{Sch}$) is determined, the leap time ($t_o$) is determined from the interval of time between the first signal (S1) and the directly following second signal (S2), and the distance apart (FA) of the feet at any time is determined from the duration (LZ) of the third signal (S3) from the other shoe (3) meeting the ground (14) below until arrival at the first receiver (10), that is, from the interval of time between the second signal (S2) and the fourth signal (S4) at the second receiver (21).

5. An equipment as in Claim 4, characterized in that the evaluator device (23) from the pace time ($t_{Sch}$), the leap time ($t_o$) and the distance apart (FA) of the feet determines the length of stride (SW) at the time in accordance with the formula

$$SW = \frac{FA}{1 - \dfrac{t_o}{t_{Sch}}}$$

and prepares and/or emits it as an indicator signal code.

6. An equipment as in one of the Claims 1 to 5, characterized in that the evaluator device is a microcomputer (23).

7. An equipment as in Claim 5 or 6, characterized in that the indicator signal code is indicated via an associated indicator (24).

8. An equipment as in one of the Claims 1 to 7, characterized in that all of the lengths of stride (SW) are added up in the evaluator device (23) and the result is made available as a distance-travelled code and/or is fed via a converter to an indicator (24).

9. An equipment as in one of the Claims 1 to 8, characterized in that in the evaluator device (23) stores are provided for storage of the signals received and/or of the intermediate and/or final results determined.

10. An equipment as in one of the Claims 1 to 9, characterized in that in the shoes (2, 3) on the inner sole (25) a surface electrode (26) connected to the respective transmitter output is provided and via it the body of the wearer of the shoes serves as output member or as antenna.

## Revendications

1. Dispositif pour la détermination du déroulement du mouvement pendant les courses à pied comportant deux chaussures dans chacune desquelles est prévu un contact de sol ou un capteur de pression, sur lesquelles dans au moins une chaussure (2 et/ou 3) est prévu lors du soulèvement par rapport au sol (14) un premier capteur de pression (5) correspondant et un premier émetteur (8) pouvant être commandé à partir de celui-ci et émettant ainsi un premier signal (S1), ainsi qu'un premier récepteur (10) correspondant à un rayonnement acoustique et/ou électromagnétique, qui de la même manière commande un autre premier émetteur (8) par lequel dans l'une ou l'autre des chaussures (3 ou 2) est prévu, lors de la prise de contact avec le sol (14) un second capteur correspondant (12) et au moins un second émetteur (16) pouvant être actionné à partir de celui-ci, qui peut donner par l'intermédiaire du second émetteur (12) un deuxième signal de sortie (S2), par lequel le second émetteur ou un autre second émetteur (16 et 18) peut donner par commande par l'intermédiaire du second capteur (12), un autre signal de sortie, le troisième (S3), qui peut être reçu à partir du second récepteur (10) de l'une des chaussures (2), et le premier émetteur (10) peut émettre grâce au premier ou à l'autre premier émetteur (8) un quatrième signal de sortie (S4) dégagé à partir du troisième signal de sortie émis (S3) et au second émetteur (21) duquel est associé l'objet cité de l'invention, qui émet le premier, le deuxième et le quatrième signal (S1, S2, S4), et peut être discriminé en origine et en temps et transmet ces signaux correspondant ou dérivés à des signaux de commande d'un dispositif de conversion du second récepteur (21) qui de son côté détermine le déroulement du mouvement à partir des signaux de commande en temps et en parcours.

2. Dispositif selon la revendication 1, caractérisé en ce que le premier émetteur (8) et le second émetteur (16) sont formés comme des émetteurs à haute fréquence, le premier récepteur (10) comme un récepteur d'ultrasons, l'autre second émetteur (18) comme un émetteur d'ultrasons, et le second récepteur (21) comme un récepteur à haute fréquence.

3. Installation selon la revendication 1 ou 2, caractérisé en ce que les signaux à haute fréquence, en particulier le premier signal (S1), le troisième signal (S3) et le quatrième signal (S4) sont émis sous forme d'impulsions de longueurs différentes les unes des autres.

4. Dispositif selon les revendications 1 à 3, caractérisé en ce que le second récepteur (21) et/ou le dispositif de conversion (23) contient ou contiennent un dispositif horloger qui, à partir de l'intervalle de durée de chacun des deux signaux de même nature se succédant les uns les autres, premier et/ou deuxième signal (S1, S1', S2, S2') détermine la durée du pas ($t_{Sch}$) à partir du laps de temps du premier signal (S1) venant du deuxième signal (S2) lui faisant suite immédiatement, le temps de saut ($t_o$) et à partir du temps de parcours (LZ) du troisième signal (S3) provenant de l'impact de l'autre chaussure (3) sur le sol (14) jusqu'à l'arrivée au premier émetteur (10), ainsi à partir du second laps de temps du deuxième signal (S2) en provenance du quatrième signal (S4) sur le second émetteur (21) de chaque enjambée (FA), est déterminé.

5. Dispositif selon la revendication 4, caractérisé en ce que le dispositif de conversion (23) détermine à partir de la durée du pas ($t_{Sch}$), du temps de saut ($t_o$) et de l'enjambée (FA) selon la formule :

$$SW = \frac{FA}{1 - \dfrac{t_o}{t_{Sch}}}$$

et le conditionne ou le fournit sous forme d'un code de signal d'affichage.

6. Dispositif selon l'une des revendications 1 à 5, caractérisé en ce que le convertisseur de données est un microcalculateur (23).

7. Dispositif selon la revendication 5 ou 6, caractérisé en ce que le code de signal d'affichage est affiché sur un écran associé (24).

8. Dispositif selon l'une des revendications 1 à 7, caractérisé en ce que toutes les étendues de pas (SW) sont introduites dans le convertisseur de données (23) et le résultat sous forme de code de distance est mis en place pour la mise à disposition et/ou est transmis à un système d'affichage (24) par un transducteur.

9. Dispositif selon l'une des revendications 1 à 8, caractérisé en ce que dans le convertisseur de données (23) sont prévues des mémoires pour stocker les signaux émis et/ou les résultats intermédiaires ou finaux déterminés.

10. Dispositif selon l'une des revendications 1 à 9, caractérisé en ce que dans les chaussures (2, 3) sur la semelle intérieure (25), on prévoit une électrode plate (26) reliée à chacune des sorties d'émetteur, et par celle-ci, le corps du porteur des chaussures sert d'élément de liaison ou d'antenne.

FIG.1

FIG.2

FIG.3

FIG.4

FIG.5